# EUROPEAN PATENT SPECIFICATION

(11) **EP 2 476 076 B1**
(45) Date of publication and mention of the grant of the patent: **29.04.2015**
(21) Application number: 10752380.5
(22) Date of filing: 02.09.2010
(51) Int. Cl.: G06F 21/83, G06F 21/85, G06F 3/023

(54) **Secure keyboard, video, mouse switch, KVM-switch**
Sicherer Maus-Tastatur-Bildschirm-Schalter, KVM-switch
Un commutateur écran-clavier-souris sécurisé, KVM-switch

(30) Priority: 09.09.2009 GB 0915754; 09.09.2009 EP 09275074
(43) Date of publication of application: 18.07.2012
(73) Proprietor: BAE Systems PLC, London SW1Y 5AD (GB)
(72) Inventor: BEACHAM, Richard, Patrick, Todd, Christchurch, Dorset BH23 4JE (GB)
(74) Representative: Barnes, Philip Michael
(86) International application number: PCT/GB2010/051450
(87) International publication number: WO 2011/030126

(56) References cited:
- US-A1- 2007 074 179
- US-A1- 2007 150 818

## Description

The present invention relates to the field of secure switches, in particular those for controlling operation of two or more computers using a common keyboard, video display and mouse.

In a system comprising a number of separate computers controlled by a single user it is desirable to enable that user to control each computer from a single keyboard, video display and mouse. This is conventionally achieved by use of a keyboard, video, mouse (KVM) switch. Control is typically switched between computers through activation of a hot key sequence from the keyboard and is driven by software programmed into the switch.

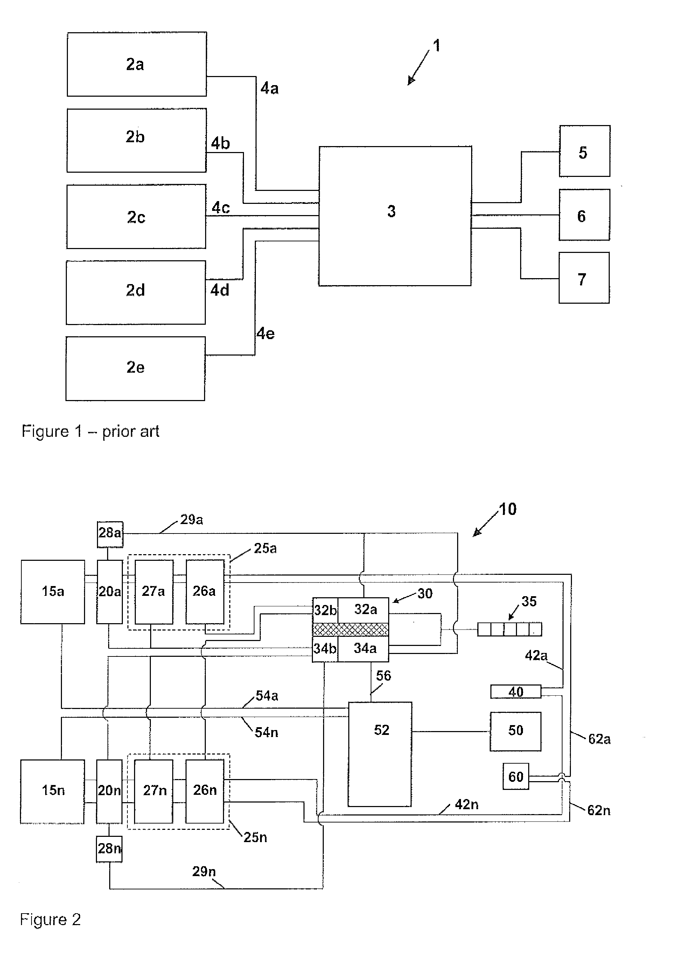

Each computer is generally hard wired into the switching device. Figure 1 illustrates a computer system 1 comprising five computers 2a, 2b, 2c, 2d, 2e each connected to a KVM switching device 3 using cables 4a, 4b, 4c, 4d, 4e. A single keyboard 5, video display 6 and mouse 7 are each connected to the KVM switch 3 and are used to control each respective computer 2a-e.

In operation, a particular computer, say 2b is selected, through some predetermined sequence of keyboard strokes originating at the keyboard 5. Signals are then routed between the input and display devices 5, 6, 7 through KVM switch 3 to and from the chosen computer, 2b. When it is necessary to control an alternative computer, say 2e, a corresponding sequence of keyboard strokes are applied at the keyboard 5 and the routing is altered within the KVM switch 3 so that communication between the computer 2e and the input and display devices 5, 6, 7 is effected.

However, it may be necessary to isolate the computers 2a-e from one another, e.g. if each computer is handling data with a different level of protective marking (i.e. security level). Under these circumstances each hard wire link (e.g. cables 4a to 4e) between the computers and the KVM switch is considered to represent a potential path of transfer of information and, therefore, represents a security risk. In order to prevent transfer of information along any such paths, it is necessary to substantially physically separate the paths to prevent leakage there between and thereby effect assurance to a high grade.

Examples of prior art can be found in documents US2007/150818A1 and US2007/074179A1.

It is, therefore, desirable to develop a system having the flexibility of the conventional KVM switch whilst restricting transfer of data both to and between computers.

According to a first aspect, the present invention provides a secure switch assembly for controlling first and second computers using a common keyboard and a common mouse, the switch assembly comprising:
a secure controller comprising first and second components, each of the first and second components comprising:
   receiving means configured to receive a selection signal from a user;
   determining means configured to determine whether the selection signal represents a single coherent selection;
   generating means configured to generate a respective first or second enabling signal dependent on the determining means; and
   transmitting means configured to emit the respective first and second enabling signals;
   a first switching element, associated with a first computer, configured to receive a signal indicative of a mouse instruction from a mouse, a signal indicative of a keyboard instruction from a keyboard and the first enabling signal from the secure controller; and
   a second switching element, associated with the first computer, configured to receive a signal indicative of a mouse instruction from the first switching element, a signal indicative of a keyboard instruction from the first switching element and the second enabling signal from the secure controller, wherein the first and second switching elements are configured to enable transmission of the mouse and keyboard instructions if both the first and second enabling signals are respectively received.

By providing a secure switch having dedicated switching means associated with each respective computer, a data path between the common inputs, represented by a keyboard and a mouse, and each respective computer can effectively be isolated and thereby effect assurance to a high grade. In so doing, the risk associated with potential data transfer between the computers is reduced.

According to a second aspect, a secure system may be provided, the system may comprise a secure switch assembly of the aforementioned type, together with an emulation device, associated with the first computer, for emulating the presence of a keyboard and a mouse, the emulation device being connected to the second switching element and being configured to receive a signal indicative of a mouse instruction from the second switching element, a signal indicative of a keyboard instruction from the second switching element and a first or second enabling signal from the secure controller.

The system may comprise an assessor, associated with the emulation device, for assessing a status of the emulation device, configured to transmit a signal indicative of the status to the secure controller. The system may comprise first and second computers together with a secure switch, the switch may comprise first and second switching elements associated with each respective computer, each computer may be connected to a respective second switching element and may be configured to receive instructions therefrom.

The system may comprise a keyboard and a mouse for receiving instructions from a user of the system and for supplying said instructions to the first or the second computer via the secure switch assembly. The system may comprise a video display for displaying data received from the first or the second computer, data may be received by the video display from an enabled computer via a video multiplexer device but no data may be transferred to the video multiplexer device from the video display. Thus a so called "data diode" may be effected.

The system may comprise a selector, configured to receive an instruction from a user of the system, indicative of which computer is to be controlled by the common keyboard and the common mouse. The selector may be configured to generate the selection signal, indicative of the received instruction, and to transmit the selection signal to the secure controller.

According to a third aspect, the present invention provides a method for controlling first and second computers using a common keyboard and a common mouse using a secure switch assembly, the assembly comprising a secure controller
and a secure switch associated with each respective computer, each secure switch comprising first and second switching elements, the method comprising the steps of:
receiving a selection signal at the secure controller from a selector, whereby the selection signal is separately received by first and second components of the secure controller, each component separately determining whether the selection signal represents a single, coherent selection and, subsequently, generating respective first and second enabling signals dependent on the respective determining steps;
transmitting the first and second enabling signals from the secure controller to respective first and second switching elements associated with the computer to be controlled;
receiving, at the first switching element, instructions from the common mouse and the common keyboard and the first enabling signal from the secure controller;
receiving, at the second switching element, the instructions from the first switching element and the second enabling signal from the secure controller; and
transmitting the instructions through first and second switching elements to the computer selected to be controlled.

The selection signal may comprise two independently generated signals, one being transmitted to each of the first and second components of the secure controller.

The invention will now be described in detail, by way of example only and with reference to the accompanying drawings in which:
Figure 1 illustrates a computer system using a conventional KVM switch; and
Figure 2 illustrates a computer system using a secure KVM switch.

Figure 2 illustrates a secure computer system 10 comprising a plurality of computers 15ᵢ, only two computers 15ₐ, 15ₙ are illustrated in this example for clarity. Each computer 15ᵢ has associated therewith a dedicated keyboard and mouse emulation device 20ᵢ. The emulation device 20ᵢ serves to interpret incoming signals, indicating a presence or absence of genuine keyboard/mouse instructions, and to provide the computer 15ᵢ with an apparent constant presence of a keyboard and a mouse when they are actually absent, to encourage smooth functioning of the computer 15ᵢ.

A dedicated, secure keyboard and mouse switch 25ᵢ is located in line with each emulation device 20ᵢ. Each switch 25ᵢ is connected, in turn, to a central secure controller 30 and works in combination therewith to enable or disable the corresponding computer 15ᵢ. The combination of the, or each, secure switch 25ᵢ and the secure controller 30 may also be referred to as a secure switch assembly. The secure controller 30 is configured to receive signals from a selector 35 and, thereby, to ascertain and to govern which computer 15ᵢ is to be controlled by a user of the system 10. The selector 35 is independent from a keyboard 40 connected to the system i.e. isolated from keyboard instructions issued therefrom.

Each respective secure switch 25ᵢ comprises first and second elements 26ᵢ, 27ᵢ through which data must pass before being received by the computer 15ᵢ. Each element 26ᵢ, 27ᵢ is configured to receive a signal from each of the keyboard 40 and the mouse 60 together with an enabling signal from the secure controller 30. Unless a respective enabling signal is received by an element 26ᵢ, 27ᵢ, data from the keyboard 40 and mouse 60 may not pass therethrough. Consequently, for data to be transmitted through secure switch 25ᵢ to the computer 15ᵢ, each element 26ᵢ, 27ᵢ must receive an enabling signal from the secure controller 30. If either one of the elements 26ᵢ, 27ᵢ fails to receive its respective enabling signal, data transfer is prevented.

The computer 15ᵢ may be quite sensitive in that it may seize if the user attempts to switch to another computer, say 15n, whilst data packets are being transmitted through the emulation device 20ᵢ. It is, therefore, beneficial to ensure that the emulation device 20ᵢ is clear of any data packets when switching from one computer 15ᵢ to another 15ₙ. In this embodiment, a "busy line" assessor 28ₗ is incorporated in a dedicated line 29ᵢ extending between each emulation device 20ᵢ and the secure controller 30. The assessor 28ᵢ determines whether data packets are being transmitted through the emulation device 20ᵢ at any particular instant. A status of the emulation device 20ᵢ is fed back to the secure controller 30, to enable check logic contained therein to ensure that no data packets are being transmitted through the emulation device 20ᵢ as switching between computers 15 is effected. Hence, seizing of the computer 15ᵢ due to this sensitivity is avoided.

The secure controller 30 comprises two substantially similar components 32, 34 for independently confirming the user's selection of computer to be controlled by the remote keyboard 40 and mouse 60. Each component 32, 34 comprises two portions 32a, 32b, 34a, 34b. Each portion is configured to receive a signal, decode the signal and ensure that only a single, consistent enabling signal (representing a single computer, say 15ₐ) is output therefrom to confirm the user's selection intention. The secure controller 30, thus serves to determine whether a selection signal, generated by the selector 35, represents a single, coherent selection from the user. More detail is given below.

The user of the system 10 is presented with a single keyboard 40, video display 50 and mouse 60 in addition to the selector 35. The keyboard 40 and mouse 60 are each configured to supply an input line 42ᵢ, 62ᵢ to each computer 15ₗ respectively. The video display 50 is provided in communication with a video multiplexer device 52, which, in turn, is configured to receive a series of output lines 54ᵢ from each respective computer 15ᵢ.

A conventional video device undertakes two way traffic with a computer as information is not only sent to a screen to be displayed but also information is passed from the screen to the computer e.g. to indicate the type and resolution of the screen. In order to replace such a two way communication with a uni-directional route, to thereby inhibit transfer of data from the video display 50, display information (such as resolution of the video display device 50) is fixed within the architecture. By hard wiring this information, a requirement for a feedback loop is eliminated and one way data transfer can be established.

The video multiplexer device 52 is configured to receive an enabling signal from the secure controller 30 through line 56 to identify which of the output lines 54ᵢ should be active. Only a single line 54ᵢ is activated at any one time, the active line corresponds to the particular computer 15ᵢ selected by the user.

In operation, the user is currently communicating with a computer, say 15ᵢ, and the user selects an alternative computer, say 15ₐ, with which he now wishes to communicate by physically selecting a corresponding option on the hard wired selector 35. In this example, two signals X and Y indicating this selection are then generated and transmitted by the selector 35 and are received by the secure controller 30.

A first portion 32a of a first component 32 of the controller 30 receives and decodes a first signal (say X) from the user. The first portion 32a also receives an output from assessor 28ᵢ to indicate whether any data packets are passing through the emulation device 20ᵢ associated with the current computer 15ᵢ. If no such data packets are being transmitted, the decoded signal X' is transmitted to a second portion 32b of the secure controller 30 to indicate which computer 15ₐ has been selected. The second portion 32b then confirms that only a single computer 15ₐ has been selected. The signal X' represents a number of "lines" each of which may be "high" or "low". In this example, a single "high" indicates that just one computer 15ₐ is to be activated. Alternatively, a negative logic could be implemented whereby a single "low" indicates that just one computer 15ₐ is to be activated.

If the selected computer 15ₐ is different from the currently enabled computer 15ᵢ, switching element 26ᵢ, associated with the currently enabled computer 15i, is disabled and switching element 26ₐ, associated with the newly selected computer 15ₐ, is enabled.

Substantially simultaneously, a second portion 34a of a second component 34 of the controller 30 receives and decodes a second signal (say Y) from the user. The second portion 34a also receives an output from assessor 28ᵢ to indicate whether any data packets are passing through the emulation device 20ᵢ associated with the current computer 15ᵢ. If no such data packets are being transmitted, the decoded signal Y' is transmitted to a second portion 34b of the secure controller 30 to indicate which computer 15ₐ has been selected. The second portion 34b then confirms that only a single computer 15ₐ has been selected. The signal Y' represents a number of "lines" each of which may be "high" or "low". As described earlier, a single "high" (or a single "low") indicates that just one computer 15ₐ is to be activated.

If the selected computer 15ₐ is different from the currently enabled computer 15ᵢ, switching element 27ᵢ, associated with the currently enabled computer 15ᵢ, is disabled and switching element 27ₐ, associated with the newly selected computer 15ₐ, is enabled.

In this example, two independent signals X and Y are generated by the selector 35. In an alternative embodiment, a single, combined signal XY may be generated. The combined signal may have two components X, Y. The first portion 32a checks that component Y is within a valid range and then that component X is also within a valid range before acting upon the component X. Meanwhile, the other first portion 34a checks that component X is within a valid range and then that Y is within the valid range before acting upon the component Y.

In a more sophisticated embodiment, the single combined signal XY may have more complex characteristics. In this case, the first portions 32a, 34a and second portions 32b, 34b of the secure controller 30 are each configured to identify certain different parameters within the combined signal XY or the decoded combined signal XY'.

In either embodiment, it should be noted that there is no consistency check, as such, between the first and second components 32, 34 of the secure controller 30. Rather, such a check is inherent in the process as the final activation of the selected computer 15ₐ is only permitted once each switching element 26ₐ and 27ₐ associated with the selected computer 15ₐ is independently activated by the secure controller 30.

In summary, if the signals X, Y received by the secure controller 30 are consistent (representing a single selected computer 15ₐ) and the secure controller 30 is operating correctly, then both first and second elements 26ₐ, 27ₐ of the same secure switch 25ₐ receive respective enabling signals from the controller 30. Consequently, communication lines become active through the switch 25ₐ such that signals from the keyboard 40, via line 42ₐ, and from the mouse 60, via line 62ₐ, are conveyed to the newly selected computer 15ₐ. In contrast, if the signals X, Y received by the secure controller 30 are inconsistent (e.g. representing different selected computers 15ₐ, 15ₙ), a first element 26ₐ of one secure switch 25ₐ may be activated whilst a second element 27ₙ of a second, different, secure switch 25ₙ may be activated. Consequently, no communication from the keyboard 40 and the mouse 60 to either computer 15ₐ, 15ₙ is enabled.

In this embodiment, each secure switch 25 comprises two elements 26, 27 to correspond to the two components 32, 34 of the secure controller 30. However, in a more sophisticated embodiment, each secure switch 25 could comprise a greater number, say three or four elements, in which case the secure controller 30 comprises a corresponding number of components. Each element of a single secure switch 25 must receive an enabling signal from a corresponding component of the respective secure controller 30 in order to permit transmission of the keyboard and/or mouse instructions through the secure switch 25 to the computer 15. In a system comprising computers having different security requirements, the secure switches 25 may each have a different appropriate number of elements. If the system comprises computers representing different levels of protective marking a secure switch having two elements as illustrated is appropriate if the separation is represented by a difference in two or three levels of protective marking. If, however, the levels of protective marking rise to four or more or if a mixture of one, two, three and/or four levels separate the protective marking of the computers, then a system having three or more elements may be required.

In the embodiment illustrated in Figure 2, one of the components 34 of the secure controller 30 is also connected to the emulation device 20. Thus transfer of data through the emulation device 20 may also be subject to receiving an enabling signal. In this example, the enabling signal from the second component 34 is conveyed to the emulation device 20 and, thus, the transmission of data there through is permitted. Alternatively, a separate enabling signal from a third component of the secure controller 30 may be used.

One component 34 of the secure controller 30 also transmits an enabling signal to the multiplexer device 52 through output line 56 to identify the computer 15 from which the device 52 is to receive graphical information to be displayed on the video display 50. As described above, only a single port is enabled at any one time. The graphical information passed between the computer 15 and the video display 50 via the multiplexer device 52 comprises standard RGB channels together with vertical and horizontal synchronisation channels.

## Claims

1. A secure switch assembly (25ᵢ) for controlling first and second computers (15ₐ,15ₙ) using a common keyboard (40) and a common mouse, the switch assembly comprising:
a secure controller comprising first and second components, each of the first and second components comprising:
receiving means configured to receive a selection signal from a user;
determining means configured to determine whether the selection signal represents a single coherent selection;
generating means configured to generate a respective first or second enabling signal dependent on the determining means; and
transmitting means configured to emit the respective first and second enabling signals;
a first switching element, associated with a first computer, configured to receive a signal indicative of a mouse instruction from a mouse (60), a signal indicative of a keyboard instruction from a keyboard (40) and the first enabling signal from the secure controller; and
a second switching element, associated with the first computer, configured to receive a signal indicative of a mouse instruction from the first switching element, a signal indicative of a keyboard instruction from the first switching element and the second enabling signal from the secure controller, wherein the first and second switching elements are configured to enable transmission of the mouse and keyboard (40) instructions if both the first and second enabling signals are respectively received.

2. A secure system comprising:
a secure switch assembly (25ᵢ) according to Claim 1; and
an emulation device, associated with the first computer (15ₐ), for emulating the presence of a keyboard (40) and a mouse (60), the emulation device being connected to the second switching element and being configured to receive a signal indicative of a mouse instruction from the second switching element, a signal indicative of a keyboard instruction from the second switching element and a first or second enabling signal from the secure controller.

3. A system according to Claim 2, comprising an assessor, associated with the emulation device, for assessing a status of the emulation device, configured to transmit a signal indicative of the status to the secure controller.

4. A system according to Claim 2 or Claim 3, comprising:
first and second computers (15ₐ,15ₙ); and
a secure switch (25ᵢ), the switch comprising first and second switching elements associated with each respective computer, each computer being connected to a respective second switching element and being configured to receive instructions therefrom.

5. A system according to Claim 4, comprising a keyboard (40) and a mouse (60) for receiving instructions from a user of the system and for supplying said instructions to the first or the second computer (15ₐ,15ₙ) via the secure switch assembly.

6. A system according to Claim 5, wherein the system comprises a video display for displaying data received from the first or the second computer, wherein data is received by the video display from an enabled computer via a video multiplexer device but wherein no data is transferred to the video multiplexer device from the video display.

7. A system according to any of Claims 2 to 6, wherein the system comprises a selector configured to receive an instruction from a user of the system, indicative of which computer is to be controlled by the common keyboard (40) and the common mouse(60).

8. A system according to Claim 7, wherein the selector is configured to generate the selection signal, indicative of the received instruction, and to transmit the selection signal to the secure controller.

9. A method for controlling first and second computers (15ₐ, 15ₙ) using a common keyboard (40) and a common mouse (60) using a secure switch assembly, (25ᵢ) the assembly comprising a secure controller and a secure switch associated with each respective computer, each secure switch (15ᵢ) comprising first and second switching elements, the method comprising the steps of:
receiving a selection signal at the secure controller from a selector, whereby the selection signal is separately received by first and second components of the secure controller, each component separately determining whether the selection signal represents a single, coherent selection and, subsequently, generating respective first and second enabling signals dependent on the respective determining steps;
transmitting the first and second enabling signals from the secure controller to respective first and second switching elements associated with the computer to be controlled;
receiving, at the first switching element, instructions from the common mouse and the common keyboard and the first enabling signal from the secure controller;
receiving, at the second switching element, the instructions from the first switching element and the second enabling signal from the secure controller; and
transmitting the instructions through first and second switching elements to the computer selected to be controlled.

10. A method according to Claim 9, wherein the selection signal comprises two independently generated signals, one being transmitted to each of the first and second components of the secure controller.

## Patentansprüche

1. Sicherheitsschalteranordnung (25ᵢ) zum Steuern eines ersten und eines zweiten Computers (15ₐ, 15ₙ) unter Verwendung einer gemeinsamen Tastatur (40) und einer gemeinsamen Maus, wobei die Schalteranordnung Folgendes umfasst:
eine Sicherheitssteuereinheit, die eine erste und eine zweite Komponente umfasst, wobei jede der ersten und der zweiten Komponente Folgendes umfasst:
Empfangsmittel, die konfiguriert sind, ein Auswahlsignal von einem Anwender zu empfangen;
Bestimmungsmittel, die konfiguriert sind, zu bestimmen, ob das Auswahlsignal eine einzige kohärente Auswahl repräsentiert;
Erzeugungsmittel, die konfiguriert sind, abhängig von den Bestimmungsmitteln ein erstes bzw. ein zweites Freigabesignal zu erzeugen; und
Sendemittel, die konfiguriert sind, das jeweilige erste und zweite Freigabesignal auszusenden;
ein erstes Schaltelement, das einem ersten Computer zugeordnet ist und das konfiguriert ist, ein Signal, das eine Mausanweisung von einer Maus (60) angibt, ein Signal, das eine Tastaturanweisung von einer Tastatur (40) angibt, und das erste Freigabesignal von der Sicherheitssteuereinheit zu empfangen; und
ein zweites Schaltelement, das dem ersten Computer zugeordnet ist und das konfiguriert ist, ein Signal, das eine Mausanweisung von dem ersten Schaltelement angibt, ein Signal, das ein Tastaturanweisung von dem ersten Schaltelement angibt, und das zweite Freigabesignal von der Sicherheitssteuereinheit zu empfangen, wobei das erste und das zweite Schaltelement konfiguriert sind, eine Übertragung der Maus- und der Tastaturanweisungen (40) zu ermöglichen, wenn jeweils sowohl das erste als auch das zweite Freigabesignal empfangen werden.

2. Sicherheitssystem, das Folgendes umfasst:
eine Sicherheitsschalteranordnung (25ᵢ) nach Anspruch 1; und
eine Emulationsvorrichtung, die dem ersten Computer (15ₐ) zugeordnet ist, um die Anwesenheit einer Tastatur (40) und einer Maus (60) zu emulieren, wobei die Emulationsvorrichtung mit dem zweiten Schaltelement verbunden ist und konfiguriert ist, ein Signal, das eine Mausanweisung von dem zweiten Schaltelement angibt, ein Signal, das eine Tastaturanweisung von dem zweiten Schaltelement angibt, und ein erstes oder ein zweites Freigabesignal von der Sicherheitssteuereinheit zu empfangen.

3. System nach Anspruch 2, das einen Gutachter umfasst, der der Emulationsvorrichtung zugeordnet ist, um einen Zustand der Emulationsvorrichtung zu bewerten, und der konfiguriert ist, ein Signal, das den Zustand angibt, an die Sicherheitssteuereinheit zu senden.

4. System nach Anspruch 2 oder Anspruch 3, das Folgendes umfasst:
einen ersten und einen zweiten Computer (15ₐ, 15ₙ); und
einen Sicherheitsschalter (25ᵢ), wobei der Schalter ein erstes und ein zweites Schaltelement umfasst, die jedem entsprechenden Computer zugeordnet sind, wobei jeder Computer mit einem entsprechenden zweiten Schaltelement verbunden ist und konfiguriert ist, Anweisungen von ihm zu empfangen.

5. System nach Anspruch 4, das eine Tastatur (40) und eine Maus (60) umfasst, um Anweisungen von einem Anwender des Systems zu empfangen und die Anweisungen an den ersten oder den zweiten Computer (15ₐ, 15ₙ) über die Sicherheitsschalteranordnung zu liefern.

6. System nach Anspruch 5, wobei das System eine Videoanzeige umfasst, um die von dem ersten oder dem zweiten Computer empfangenen Anweisungen anzuzeigen, wobei die Daten durch die Videoanzeige von einem freigegebenen Computer über eine Videomultiplexvorrichtung empfangen werden, wobei aber keine Daten an die Videomultiplexvorrichtung von der Videoanzeige übertragen werden.

7. System nach einem der Ansprüche 2 bis 6, wobei das System einen Selektor umfasst, der konfiguriert ist, eine Anweisung von einem Anwender des Systems zu empfangen, die angibt, welcher Computer durch die gemeinsame Tastatur (40) und die gemeinsame Maus (60) zu steuern ist.

8. System nach Anspruch 7, wobei der Selektor konfiguriert ist, das Auswahlsignal zu erzeugen, das die empfangenen Anweisungen angibt, und das Auswahlsignal an die Sicherheitssteuereinheit zu senden.

9. Verfahren zum Steuern eines ersten und eines zweiten Computers (15ₐ, 15ₙ) unter Verwendung einer gemeinsamen Tastatur (40) und einer gemeinsamen Maus (60) unter Verwendung einer Sicherheitsschalteranordnung (25ᵢ), wobei die Anordnung eine Sicherheitssteuereinheit und einen Sicherheitsschalter, der jedem entsprechenden Computer zugeordnet ist, umfasst, wobei jeder Sicherheitsschalter (15ᵢ) ein erstes und ein zweites Schaltelement umfasst, wobei das Verfahren die Schritte umfasst:
Empfangen eines Auswahlsignals an der Sicherheitssteuereinheit von einem Selektor, wobei das Auswahlsignal durch eine erste und eine zweite Komponente der Sicherheitssteuereinheit getrennt empfangen wird, wobei jede Komponente getrennt bestimmt, ob das Auswahlsignal eine einzige kohärente Auswahl repräsentiert, und anschließend abhängig von den jeweiligen Bestimmungsschritten Erzeugen eines ersten bzw. eines zweiten Freigabesignals;
Senden des ersten und des zweiten Freigabesignals von der Sicherheitssteuereinheit an ein jeweiliges erstes und zweites Schaltelement, das dem Computer zugeordnet ist, der zu steuern ist;
Empfangen von Anweisungen von der gemeinsamen Maus und der gemeinsamen Tastatur und des ersten Freigabesignals von der Sicherheitssteuereinheit an dem ersten Schaltelement;
Empfangen der Anweisungen von dem ersten Schaltelement und des zweiten Freigabesignals von der Sicherheitssteuereinheit bei dem zweiten Schaltelement; und
Senden der Anweisungen durch das erste und das zweite Schaltelement an den Computer, der ausgewählt wurde, gesteuert zu werden.

10. Verfahren nach Anspruch 9, wobei das Auswahlsignal zwei unabhängig erzeugte Signale umfasst, wobei eines an jede der ersten und der zweiten Komponente der Sicherheitssteuereinheit gesendet wird.

## Revendications

1. Ensemble commutateur sécurisé (25i) servant à commander des premier et deuxième ordinateurs (15a, 15n) à l'aide d'un clavier commun (40) et d'une souris commune, l'ensemble commutateur comportant :
une commande sécurisée comportant des premier et deuxième composants, chacun des premier et deuxième composants comportant :
des moyens de réception configurés pour recevoir un signal de sélection de la part d'un utilisateur ;
des moyens de détermination configurés pour déterminer si le signal de sélection représente une sélection unique cohérente ;
des moyens de génération configurés pour générer un premier ou un deuxième signal respectif d'activation en fonction des moyens de détermination ; et
des moyens d'émission configurés pour émettre les premier et deuxième signaux respectifs d'activation ;
un premier élément de commutation, associé à un premier ordinateur, configuré pour recevoir un signal indicatif d'une instruction de souris en provenance d'une souris (60), un signal indicatif d'une instruction de clavier en provenance d'un clavier (40) et le premier signal d'activation en provenance de la commande sécurisée ; et
un deuxième élément de commutation, associé au premier ordinateur, configuré pour recevoir un signal indicatif d'une instruction de souris en provenance du premier élément de commutation, un signal indicatif d'une instruction de clavier en provenance du premier élément de commutation et le deuxième signal d'activation en provenance de la commande sécurisée, les premier et deuxième éléments de commutation étant configurés pour permettre l'émission des instructions de souris et de clavier (40) si les premier et deuxième signaux d'activation sont tous deux respectivement reçus.

2. Système sécurisé comportant :
un ensemble commutateur sécurisé (25i) selon la revendication 1 ; et
un dispositif d'émulation, associé au premier ordinateur (15a), servant à émuler la présence d'un clavier (40) et d'une souris (60), le dispositif d'émulation étant relié au deuxième élément de commutation et étant configuré pour recevoir un signal indicatif d'une instruction de souris en provenance du deuxième élément de commutation, un signal indicatif d'une instruction de clavier en provenance du deuxième élément de commutation et un premier ou un deuxième signal d'activation en provenance de la commande sécurisée.

3. Système selon la revendication 2, comportant un évaluateur, associé au dispositif d'émulation, servant à évaluer un état du dispositif d'émulation, configuré pour envoyer un signal indicatif de l'état à la commande sécurisée.

4. Système selon la revendication 2 ou Claim 3, comportant :
des premier et deuxième ordinateurs (15a, 15n) ; et un commutateur sécurisé (25ᵢ), le commutateur comportant des premier et deuxième éléments de commutation associés à chaque ordinateur respectif, chaque ordinateur étant relié à un deuxième élément respectif de commutation et étant configuré pour recevoir des instructions en provenance de celui-ci.

5. Système selon la revendication 4, comportant un clavier (40) et une souris (60) servant à recevoir des instructions de la part d'un utilisateur du système et à fournir lesdites instructions au premier ou au deuxième ordinateur (15a, 15n) via l'ensemble commutateur sécurisé.

6. Système selon la revendication 5, le système comportant un affichage vidéo servant à afficher des données reçues en provenance du premier ou du deuxième ordinateur, des données étant reçues par l'affichage vidéo en provenance d'un ordinateur activé via un dispositif multiplexeur vidéo mais aucune donnée n'étant transférée au dispositif multiplexeur vidéo à partir de l'affichage vidéo.

7. Système selon l'une quelconque des revendications 2 à 6, le système comportant un sélecteur configuré pour recevoir une instruction de la part d'un utilisateur du système, indicative de celui des ordinateurs qui est appelé à être commandé par le clavier commun (40) et la souris commune (60).

8. Système selon la revendication 7, le sélecteur étant configuré pour générer le signal de sélection, indicatif de l'instruction reçue, et pour envoyer le signal de sélection à la commande sécurisée.

9. Procédé de commande de premier et deuxième ordinateurs (15a, 15n) à l'aide d'un clavier commun (40) et d'une souris commune (60) en utilisant un ensemble commutateur sécurisé, (25i) l'ensemble comportant une commande sécurisée et un commutateur sécurisé associé à chaque ordinateur respectif, chaque commutateur sécurisé (15i) comportant des premier et deuxième éléments de commutation, le procédé comportant les étapes consistant à :
recevoir un signal de sélection au niveau de la commande sécurisée en provenance d'un sélecteur, le signal de sélection étant reçu séparément par des premier et deuxième composants de la commande sécurisée, chaque component déterminant séparément si le signal de sélection représente une sélection unique cohérente et générant par la suite des premier et
deuxième signaux respectifs d'activation en fonction des étapes respectives de détermination ;
envoyer les premier et deuxième signaux d'activation de la commande sécurisée à des premier et deuxième éléments respectifs de commutation associés à l'ordinateur à commander ;
recevoir, au niveau du premier élément de commutation, des instructions en provenance de la souris commune et du clavier commun et le premier signal d'activation en provenance de la commande sécurisée ;
recevoir, au niveau du deuxième élément de commutation, les instructions provenant du premier élément de commutation et le deuxième signal d'activation en provenance de la commande sécurisée ; et
envoyer les instructions via des premier et deuxième éléments de commutation à l'ordinateur sélectionné pour être commandé.

10. Procédé selon la revendication 9, le signal de sélection comportant deux signaux générés indépendamment, l'un d'eux étant envoyé à chacun des premier et deuxième composants de la commande sécurisée.
